# FASCICULE DE BREVET EUROPEEN

(11) **EP 4 225 203 B1**
(45) Date de publication et mention de la délivrance du brevet: **21.08.2024**
(21) Numéro de dépôt: 21810399.2
(22) Date de dépôt: 07.10.2021
(51) Int. Cl.: A61C 5/42

(54) **INSTRUMENT ENDODONTIQUE ROTATIF À BORDS D'ATTAQUE IRRÉGULIERS**
ROTIERENDES ENDODONTISCHES INSTRUMENT MIT UNREGELMÄSSIGEN VORDERKANTEN
ROTARY ENDODONTIC INTRUMENT HAVING IRREGULAR LEADING EDGES

(30) Priorité: 08.10.2020 FR 2010306
(43) Date de publication de la demande: 16.08.2023
(73) Titulaire: Neolix SAS, 53600 Evron (FR)
(72) Inventeur: PERNOT, Jacques, 25870 Vieilley (FR); PAUL, Emilien, 53600 Mezangers (FR)
(74) Mandataire: Boüan du Chef du Bos, Louis-Paterne
(86) Numéro de dépôt international: PCT/FR2021/000115
(87) Numéro de publication internationale: WO 2022/074303

(56) Documents cités:
- EP-A1- 0 120 542
- WO-A1-2010/130642
- WO-A1-2017/154029

## Description

### Domaine de l'invention

La présente invention concerne un instrument endodontique, destiné à opérer dans le canal radiculaire d'une dent.

Il concerne en particulier un instrument endodontique destiné à être utilisé de façon rotative.

### Art antérieur

Les instruments endodontiques sont utilisés par les praticiens dentaires quand il est nécessaire de dévitaliser une dent. Un tel traitement consiste à éliminer les tissus vivants à l'intérieur du canal dentaire, à nettoyer ce canal, notamment par une action mécanique de grattage, et à mettre en forme ce canal pour enfin réaliser son obturation, souvent à l'aide de gutta-percha.

Pour effectuer le nettoyage et la mise en forme du canal, le dentiste utilise des instruments endodontiques qui présentent généralement la particularité d'être très fins, et relativement longs, afin de pénétrer dans le canal sur toute sa longueur. Ces instruments doivent également être extrêmement souples, pour suivre les courbures parfois complexes des canaux dentaires.

Parmi ces instruments endodontiques, on connaît des limes destinées à être utilisées suivant un mouvement de va-et-vient. On connaît également des instruments rotatifs, destinés à être entraînés en rotation continue ou alternée. De tels instruments, devant à la fois être fins, souples et très solides pour éviter toute rupture à l'intérieur de la dent d'un patient, sont souvent réalisés dans un alliage de nickel-titane, couramment désigné par l'expression *Ni-Ti.*

Les instruments endodontiques rotatifs peuvent présenter plusieurs inconvénients qui doivent être évités, dans la mesure du possible.

Ils peuvent ainsi causer des phénomènes de vissage. Un tel phénomène peut principalement apparaître pour les instruments rotatifs présentant une arête de coupe hélicoïdale. Il peut arriver qu'un dysfonctionnement entraîne l'instrument à cesser de découper la paroi interne du canal dentaire et à s'enfoncer dans ce canal à la façon d'une vis. Dans un tel cas, l'instrument peut s'enfoncer trop profondément dans le canal, ou s'y coincer, avant que le praticien n'ait constaté le dysfonctionnement et interrompu la rotation.

L'utilisation de ces instruments cause également l'apparition de copeaux, découpés dans la paroi interne du canal dentaire. Quand de tels copeaux sont de taille trop importante, ils peuvent être difficiles à évacuer du canal dentaire et causer un coincement de l'instrument.

Un autre risque important est le risque de rupture d'un instrument. Un tel risque est renforcé quand les contraintes mécaniques liées à l'usinage sont concentrées sur une même zone de l'instrument, ou quand un couple trop important est appliqué à l'instrument.

On connaît ainsi, du document EP 0 120 542 A1, des instruments endodontiques dont certaines arêtes sont interrompues par des entailles. De telles entailles ont pour effet de fragiliser l'instrument et d'augmenter le risque de rupture.

Enfin, un instrument endodontique peut également, dans certaines situations, générer des rayures sur la paroi interne du canal dentaire. De telles rayures peuvent former des microcavités difficiles à nettoyer et à désinfecter, et pouvant donc devenir des sources d'infection après un traitement.

On connaît ainsi, par exemple du document WO 2010/130642 ou du document WO 2017/154029, des instruments endodontiques offrant des arêtes irrégulières, qui peuvent rayer les parois internes du canal dentaire.

Pour éviter ces inconvénients, de nombreux instruments de l'art antérieur présentent des géométries telles qu'ils ne réalisent que des découpes très légères de la paroi interne du canal dentaire. La mise en forme de ce canal par le praticien est en conséquence très longue.

### Objectifs de l'invention

La présente invention a pour objectif de pallier ces inconvénients de l'art antérieur et d'offrir un instrument endodontique rotatif présentant des performances et des qualités améliorées par rapport aux instruments de l'art antérieur.

En particulier, l'invention a pour objectif de proposer un instrument endodontique pouvant effectuer un usinage efficace et rapide de l'intérieur du canal dentaire, tout en limitant les risques d'apparition de phénomènes de vissage, de coincement ou de rupture de l'instrument.

Un autre objectif de l'invention est de présenter un tel instrument qui ne génère pas de copeaux présentant une difficulté d'évacuation particulière.

Un autre objectif de l'invention est de proposer un tel instrument permettant l'obtention d'un canal dentaire dont l'état de surface soit satisfaisant pour le praticien, en étant suffisamment lisse pour éviter les anfractuosités permettant d'abriter des bactéries.

### Exposé de l'invention

Ces objectifs, ainsi que d'autres qui apparaîtront plus clairement par la suite, sont atteints à l'aide d'un instrument endodontique présentant un manche apte à entraîner l'instrument en rotation autour de son axe longitudinal, et une lame s'étendant le long dudit axe longitudinal, la lame comportant une portion active présentant au moins deux arêtes de travail, chacune de ces arêtes de travail formant, dans chaque section transversale de la portion active, un point du périmètre de la lame plus éloigné de l'axe longitudinal de l'instrument que les points voisins, ladite lame présentant, sur au moins un segment de la portion active, au moins une des arêtes de travail est régulière, s'étendant à une distance de l'axe longitudinal qui est sensiblement constante ou variable régulièrement, et au moins une autre des arêtes de travail est irrégulière, cet instrument endodontique se caractérisant par le fait que, ladite ou lesdites arêtes de travail irrégulières présentent une succession de creux, où l'arête est plus proche de l'axe longitudinal, et de bosses où l'arête est plus éloignée de l'axe longitudinal, la ou les arêtes de travail irrégulières étant situées, dans chaque section transversale de ce segment, à une distance de l'axe longitudinal qui est inférieure ou égale à la distance entre l'axe longitudinal et l'arête de travail régulière, ou l'une des arêtes de travail régulières.

Ainsi, l'instrument présente, sur au moins une partie de sa longueur, une arête irrégulière qui permet notamment une plus grande efficacité de découpe, et une arête régulière qui est placée de façon à venir effacer, sur la surface interne du canal dentaire, les irrégularités dues à la découpe de l'arête irrégulière.

Selon un mode de réalisation préférentiel, la lame présente plusieurs desdits segments, séparés entre eux par des parties de la longueur de la portion active sur laquelle toutes les arêtes de travail sont régulières.

De préférence, les arêtes de travail présentent une forme générale hélicoïdale, centrée sur l'axe longitudinal.

Selon un mode de réalisation préférentiel, la largeur de la portion active est décroissante le long de l'axe longitudinal, en s'éloignant du manche.

Selon un mode de réalisation avantageux, au moins l'une des arêtes de travail irrégulière est ondulée, présentant une succession régulière de creux et de bosses.

Avantageusement, au moins l'une des arêtes de travail irrégulières est formée par une succession de rainures ménagées dans au moins une des surfaces de la lame bordant l'arête de travail.

De telles rainures peuvent avantageusement être réalisées par un procédé d'électroérosion à fil, qui permet une grande précision d'usinage.

Selon un mode de réalisation avantageux, la ou les arêtes de travail irrégulières sont situées, dans chaque section transversale du segment, à une distance de l'axe longitudinal qui est comprise entre 80% et 100% de la distance entre l'axe longitudinal et l'arête de travail régulière, ou l'une des arêtes de travail régulières.

De préférence, dans une section transversale dudit segment correspondant à un creux de ladite ou de l'une desdites arêtes de travail irrégulières, l'arête de travail irrégulière est située à une distance dudit axe longitudinal qui est comprise entre 80% et 95% de la distance entre l'axe longitudinal et l'arête de travail régulière, ou l'une des arêtes de travail régulières.

De préférence, dans une section transversale dudit segment correspondant à une bosse de ladite ou de l'une desdites arêtes de travail irrégulières, ladite arête de travail irrégulière est située à une distance de l'axe longitudinal qui est comprise entre 95% et 100% de la distance entre l'axe longitudinal et l'arête de travail régulière, ou l'une des arêtes de travail régulières.

Avantageusement, la ou les arêtes de travail irrégulières sont formées par un procédé d'électroérosion à fil.

Un tel procédé de fabrication permet en effet un usinage précis et efficace d'un instrument endodontique.

Selon un mode de réalisation avantageux, la portion active présente deux arêtes de travail, et la portion active présente, sur sa longueur, une succession de plusieurs segments présentant chacun successivement, dans cet ordre :
- une partie de la longueur de ladite portion active sur laquelle une première des arêtes de travail est régulière, et la seconde des arêtes de travail est irrégulière,
- une partie de la longueur de la portion active sur laquelle les deux arêtes sont régulières,
- une partie de la longueur de la portion active sur laquelle la seconde arête de travail est irrégulière, et la première arête de travail est régulière, et
- une partie de la longueur de la portion active sur laquelle les deux arêtes sont régulières.

Selon un autre mode de réalisation, la portion active présente trois arêtes de travail, et la portion active présente, sur la totalité de sa longueur, au moins l'une desdites arêtes de travail qui est irrégulière.

Il peut ainsi y avoir, dans ce cas, une des arêtes de travail qui est régulière sur toute la longueur de la portion active, et les deux autres arêtes de travail qui sont irrégulières sur toute la longueur de la portion active, ou une successions de segments ou une ou deux des arêtes de travail sont régulières et une ou deux des arêtes de travail sont irrégulières, ou toute autre configuration pouvant être imaginée par l'homme du métier.

Selon un mode de réalisation avantageux, la portion active d'un instrument selon l'invention peut présenter au moins une arête de travail qui est régulière sur toute la longueur de ladite portion active.

Selon un autre mode de réalisation possible, la portion active de l'instrument selon l'invention peut présenter quatre arêtes de travail, ou un plus grand nombre d'arêtes de travail. Il est également possible que la portion active présente un nombre d'arêtes de travail variable le long de la portion active.

### Liste des figures

L'invention sera mieux comprise à la lecture de la description suivante de modes de réalisation préférentiels, donnée à titre de simple exemple figuratif et non limitatif, et accompagnée des figures parmi lesquelles :
- [Fig. 1] la figure 1 est une vue de côté d'un instrument endodontique selon un mode de réalisation de l'invention.
- [Fig. 2] la figure 2 est une vue de détail, de côté, d'un segment de la portion active de l'instrument endodontique de la figure 1.
- [Fig. 3] la figure 3 est une section transversale de l'instrument endodontique de la figure 1, selon un premier plan de coupe.
- [Fig. 4] la figure 4 est une section transversale de l'instrument endodontique de la figure 1, selon un second plan de coupe, voisin du premier plan de coupe.
- [Fig. 5] la figure 5 est une section transversale d'un instrument endodontique selon un autre mode de réalisation de l'invention.
- [Fig. 6] la figure 6 est une section transversale d'un instrument endodontique selon encore un autre mode de réalisation de l'invention.

### Description détaillée de modes de réalisation de l'invention

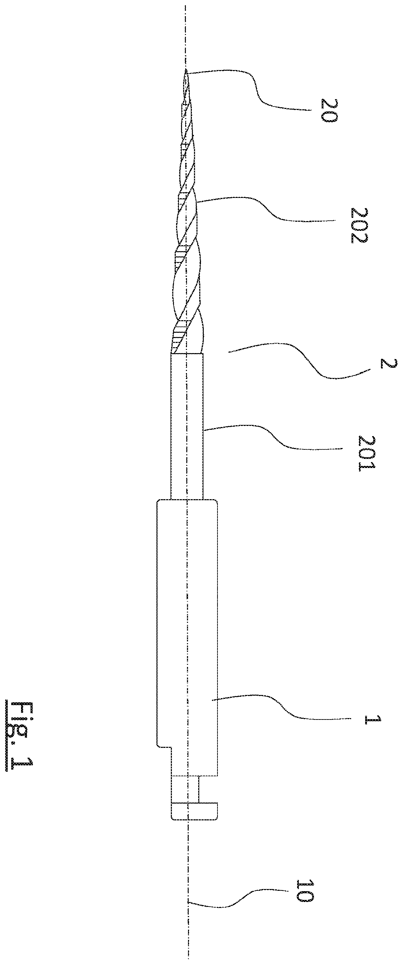

La figure 1 est une vue de côté d'un instrument endodontique selon un mode de réalisation de l'invention. Cet instrument endodontique est destiné à être entraîné en rotation, il est donc différent des limes qui ne sont destinées qu'à effectuer un mouvement de va-et-vient. En particulier, il présente un manche 1 standardisé, spécifiquement destiné à être maintenu par un porte-instrument capable de l'entraîner en rotation. Ce manche 1 maintient la lame 2 de l'instrument, pour l'entraîner en rotation autour d'un axe longitudinal 10, qui correspond à l'axe de la portion cylindrique du manche 1. La lame 2 s'étend le long de cet axe longitudinal 10, dans la situation représentée par la figure 1. Cette lame 2 présentant une certaine souplesse, elle peut toutefois se plier. On considèrera cependant dans la présente demande qu'elle s'étend le long de l'axe longitudinal 10.

Dans le mode de réalisation représenté, la lame 2 comprend une portion cylindrique 201 et une portion active 202. La portion active 202 présente une forme sensiblement hélicoïdale, s'inscrivant dans un cône dont la base présente un diamètre correspondant au diamètre de la portion cylindrique 201. Une première extrémité de la lame 2, formée par la portion cylindrique 201, est emmanchée dans le manche 1. La seconde extrémité de la lame 2, qui constitue l'extrémité libre de la lame 2, est formée par la pointe 20 de l'instrument, qui correspond sensiblement à la pointe du cône dans lequel s'inscrit la portion active 202 de l'instrument.

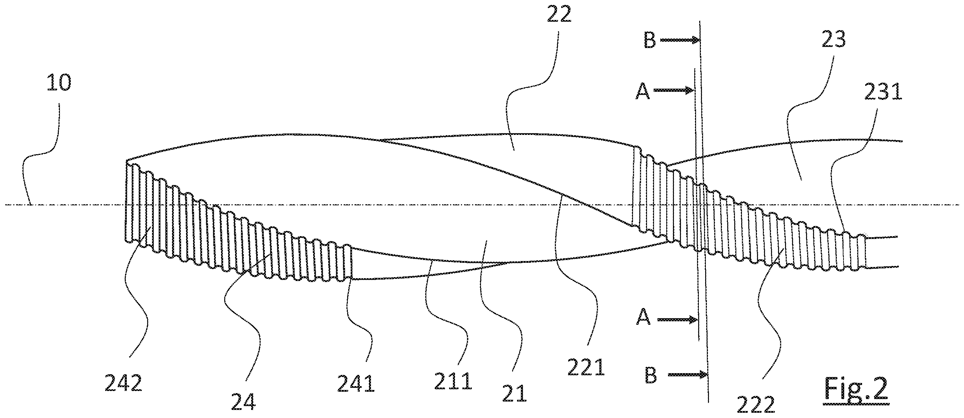

La figure 2 représente, en vue de détail de côté, une partie de la portion active 202 de l'instrument représenté par la figure 1. Comme le montrent ces figures, la portion active 202 est formée de quatre surfaces hélicoïdales : deux surfaces de dépouille 21 et 23, qui sont ici relativement proches de l'axe longitudinal 10, qui sont alternées avec deux surfaces de travail 22 et 24 qui sont relativement plus éloignées de l'axe longitudinal 10.

Comme le montre la figure 2, chacune des surfaces de travail 22 et 24 présente, dans le mode de réalisation représenté, des segments lisses alternés avec des segments rainurés. La figure 2 montre ainsi un segment rainuré 242 sur la surface de travail 24 et un segment rainurée 222 sur la surface de travail 22. Sur ces segments rainurés, la surface de travail présente des rayures, ou ondulations, qui s'étendent, dans le mode de réalisation représenté, dans un plan transversal à l'axe longitudinal 10.

Il est à noter que, dans le mode de réalisation représenté, un segment rainuré sur l'une des surfaces de travail 22 ou 24 est toujours situé sur une portion de la longueur de l'instrument sur laquelle l'autre surface de travail 22 ou 24 présente une surface lisse. La portion active 202 de l'instrument présente donc, sur toute sa longueur, au moins une surface de travail lisse.

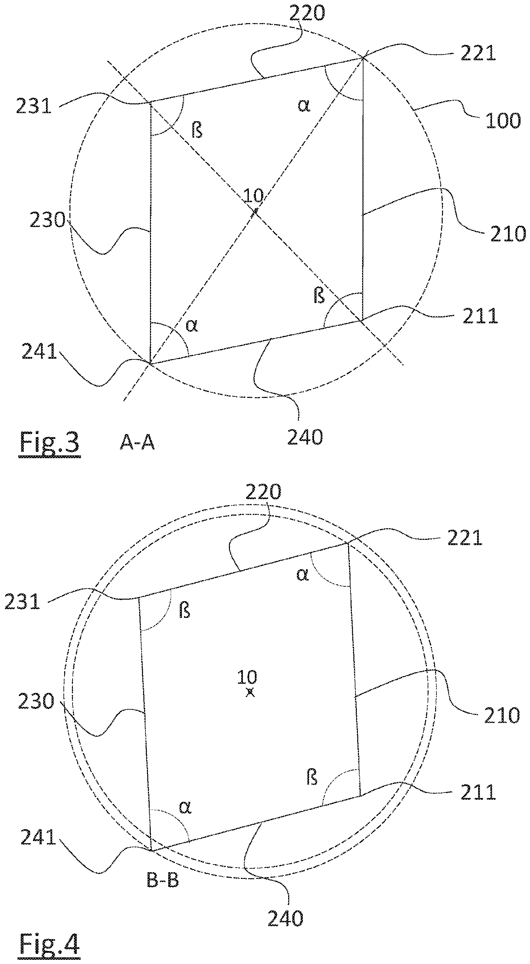

Les figures 3 et 4 sont des sections de la portion active 202, selon des plans transversaux à l'axe longitudinal 10. La figure 3 représente une première section A-A, selon un premier plan transversal dans lequel la surface de travail 24 est lisse et la surface de travail 22 est constituée par le segment rainuré 222. Ce premier plan transversal, cependant, est situé entre deux rainures successives du segment rainuré 222, ou au niveau du sommet d'une ondulation de la surface de travail 22.

Comme le montre cette figure 3, la portion active 202 de l'instrument présente une section en parallélogramme. Sur cette section, les deux bords opposés 210 et 230, rectilignes, sont les plus larges et les plus proches de l'axe longitudinal 10. Ces bords 210 et 230 correspondent respectivement aux surfaces de dépouille 21 et 23 de la portion active 202 de l'instrument. Les deux autres bords opposés 220 et 240 correspondent respectivement aux surfaces de travail 22 et 24 de la portion active 202 de l'instrument. Sur la section représentée par la figure 3, ces bords 220 et 240 sont rectilignes et parallèles.

Du fait de la forme en parallélogramme de la section, celle-ci présente deux arêtes opposées 221 et 241, appelées par la suite « arêtes de travail », qui sont plus aiguës que les deux autres arêtes 211 et 231. Ces arêtes de travail 221 et 241 constituent les points de la section transversale de la portion active qui sont les plus éloignés de l'axe longitudinal 10. Dans la section transversale représentée par la figure 3, les arêtes de travail 221 et 241 sont à égale distance de l'axe longitudinal 10. Lors de la rotation de l'instrument autour de cet axe longitudinal 10, à l'intérieur d'un canal dentaire, ce sont ces deux arêtes de travail 221 et 241 qui entrent en contact avec la surface interne du canal dentaire.

La figure 4 représente une seconde section B-B, selon un second plan transversal dans lequel la surface de travail 24 est lisse et la surface de travail 22 est constituée par le segment rainuré 222. Cette section représentée par la figure 4 est voisine et parallèle à la section représentée par la figure 3. Cette section correspond à un creux de l'une des rainures du segment rainuré 222 de la surface de travail 22, ou à un creux d'une ondulations formant ce segment rainuré.

Au niveau de cette section B-B, le bord 220 correspondant à la surface de travail 22 est donc plus proche de l'axe longitudinal 10 qu'il ne l'est dans la section A-A représentée par la figure 3. Au contraire, le bord 240 correspondant à la surface de travail 24 est sensiblement à la même distance de l'axe longitudinal 10 qu'il ne l'est dans la section A-A représentée par la figure 3.

En conséquence, l'arête de travail 241, formée par la surface de travail 24, est plus éloignée de l'axe longitudinal 10 que l'arête de travail 221 formée par la surface de travail 22, comme le montrent, sur la figure 4, deux cercles en pointillés centrés sur l'axe longitudinal 10, et passant l'un par l'arête 221 et l'autre par l'arête 241. Lors de la rotation de l'instrument autour de son axe longitudinal 10 dans un canal dentaire, l'arête de travail 241, située à une distance supérieure de l'axe 10, entre donc en contact avec la surface interne du canal dentaire préférentiellement à l'arête de travail 221.

La portion active 202 de la lame 2 présente ainsi, sur plusieurs segments de sa longueur, une arête de travail régulière, ou lisse, qui présente avantageusement une forme hélicoïdale, et une seconde arête de travail présentant une forme irrégulière, par exemple ondulée.

Par « arête régulière », on comprend dans la présente demande que l'arête suit une forme géométrique s'étendant à une distance sensiblement constante de l'axe de rotation de l'instrument, ou à une distance de l'axe de rotation qui varie de façon régulière le long de l'instrument. L'arête ne s'éloigne pas de plus de 3 microns de sa forme géométrique, qui peut être par exemple hélicoïdale.

Par « arête irrégulière », on comprend dans la présente demande que la distance entre l'arête et l'axe de rotation de l'instrument varie de façon cyclique ou irrégulière le long de l'instrument, ces variations pouvant être supérieures à 10 microns entre deux sections transversales de l'instrument situées à une distance inférieure à 100 microns l'une de l'autre.

Dans certains modes de réalisation préférentiels, ces variations peuvent former une succession plus ou moins régulière de bosses, qui sont des points de l'arête relativement plus éloignés de l'axe de rotation de l'instrument que les points voisins de l'arête, et de creux, qui sont des points de l'arête relativement plus proches de l'axe de rotation de l'instrument que les points voisins de l'arête. Dans ce cas, de préférence, la distance entre une bosse et l'axe de rotation de l'instrument est supérieure de 15 à 40 microns à la distance entre l'axe de rotation de l'instrument et les creux qui entourent cette bosse.

De façon particulièrement avantageuse, dans ce cas, au moins certaines des bosses se trouvent à une distance de l'axe de rotation égale à la distance entre l'axe de rotation et l'arête régulière.

L'irrégularité de l'arête de travail peut être causée par des rainures ou des ondulations formées sur une ou plusieurs des surfaces formant cette arête, ou par tout autre moyen connu de l'homme du métier. Ainsi, dans le mode de réalisation représenté par les figures 1 à 4, les irrégularités des arêtes de travail sont causées par une succession de rainures formées sur les surfaces de travail 22 et 24, ces rainures s'étendant dans une direction orthogonale à l'axe de rotation de l'instrument, et formant des ondulations sur ces surfaces. Il est également possible, dans d'autres modes de réalisation, que de telles rainures s'étendent sur l'autre surface formant l'arête de travail, ou sur les deux surfaces formant l'arête de travail, que de telles rainures ne soient pas orthogonales à l'axe de de rotation de l'instrument, et/ou que de telles rainures ne soient pas formées sur toute la largeur d'une surface, mais uniquement sur la partie de cette surface bordant l'arête de travail.

Selon un mode de réalisation préférentiel de l'invention, la forme de l'arête de travail irrégulière est réalisée par une électroérosion à fil. En effet, un tel procédé de fabrication permet de réaliser une arête irrégulière avec une grande précision.

De préférence, pour chaque section transversale de l'instrument dans laquelle il y a une arête de travail irrégulière, il y a également une arête travail régulière, et l'arête de travail irrégulière se trouve à une distance de l'axe de rotation de l'instrument qui est comprise entre 80% et 100% de la distance entre cet axe de rotation et l'arête régulière.

Par exemple pour une portion d'instrument ayant un diamètre de 800 microns, dans laquelle la distance entre l'axe de rotation et l'arête régulière la plus éloignée est de 400 microns, l'arête irrégulière peut présenter des ondulations de 30 microns de profondeur. Ces ondulations peuvent être causées par des rainures formées sur l'une des faces bordant cette arête. Ainsi, l'arrête irrégulière se trouve à une distance de l'axe de rotation de l'instrument qui est comprise entre 400 microns et 370 microns, soit entre 100% et environ 90% de la distance entre l'axe de rotation et l'arête régulière.

De façon avantageuse, toutes les sections transversales de l'instrument présentant une arête de travail irrégulière présentent également une arête de travail régulière, et l'arête de travail irrégulière est située à une distance de l'axe de rotation de l'instrument qui est inférieure ou égale à la distance entre cet axe de rotation et l'arête de travail régulière.

Ainsi, lors de la rotation de l'instrument dans un canal dentaire, l'arête de travail irrégulière effectue un grattage de la paroi interne du canal dentaire, en découpant des rainures transversales dans cette paroi interne. Une telle découpe par grattage est connue pour être plus efficace et plus rapide qu'une découpe par une arête régulière. Par ailleurs, elle ne produit que des copeaux de petite taille, qui peuvent être évacués facilement par l'instrument sans générer de coincement. De plus, une telle découpe n'oppose qu'une force restreinte à la rotation de l'instrument, ce qui limite le couple subi par l'instrument et les risques de coincement de celui-ci dans le canal dentaire. Enfin, la présence des portions irrégulières de l'arête limite le risque de vissage de l'instrument dans la dent. En effet, les irrégularités de l'arête forment une résistance au vissage et facilitent la rotation de l'instrument dans une direction transversale.

Au cours de la rotation de l'instrument dans le canal dentaire, cette découpe de la paroi interne du canal dentaire par l'arête de travail irrégulière est immédiatement suivie par une autre découpe par l'arête de travail régulière ou lisse. Cette arête de travail étant située à une distance de l'axe de rotation supérieure ou égale à la distance maximale entre cet axe de rotation et la seconde arête de travail, la première arête de travail effectue une découpe sur la surface interne du canal dentaire, qui a pour effet de faire disparaître intégralement, ou quasi-intégralement, les irrégularités ou rainures formées sur cette paroi interne par la découpe effectuée précédemment par l'arête de travail irrégulière.

L'instrument endodontique présente ainsi, de façon simultanée, une partie des avantages des instruments ayant une arête de travail irrégulière, et notamment une plus grande efficacité de découpe, une création de copeaux plus petits, un risque de casse ou de coincement plus faible et un risque de vissage de l'instrument plus faible, et les avantages d'un instrument à arêtes de découpe régulière, qui forme une surface interne régulière dans le canal dentaire.

Dans le mode de réalisation représenté par les figures 1 à 4, la portion active 202 de l'instrument 2 présente deux arêtes de travail 221 et 241 qui, chacune, présentent des segments dans lesquels elles forment une arête régulière et des segments dans lesquels elles forment une arête irrégulière. Cependant, au niveau de chaque section transversale de la partie active 202, au moins l'une de ces arêtes est régulière. De plus, chaque tronçon de l'instrument qui présente une arête irrégulière est entouré par des tronçons qui présentent deux arêtes régulières. Ainsi, par exemple, chacune des arêtes de travail 221 et 241 peut être successivement, sur la longueur de la portion active 202, irrégulière sur une longueur de 2 mm, et régulière sur une longueur de 3 mm.

D'autres répartition des arêtes irrégulières peuvent bien sûr être mises en oeuvre, de telle façon que la partie active comporte une arête régulière au niveau de chaque section transversale. Ainsi, il est par exemple possible que l'une des deux arêtes de travail soit une arête régulière sur toute la longueur de la partie active. L'autre arête peut alors être une arête irrégulière sur toute la longueur de la partie active ou sur un ou plusieurs tronçons de celle-ci.

Dans le mode de réalisation représenté par les figures 1 à 4, l'instrument présente deux arêtes de travail 221 et 241, les autres arêtes 211 et 231 étant situées trop proches de l'axe de rotation pour avoir un effet de découpe des parois internes du canal dentaire.

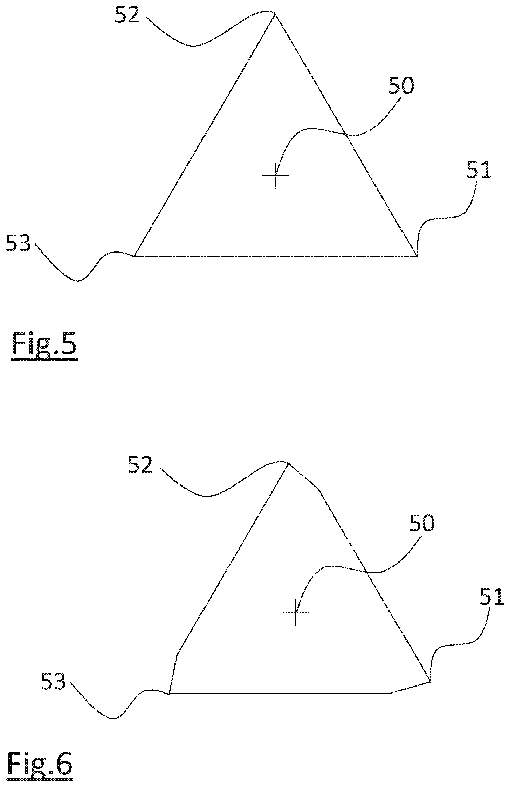

Il est cependant possible, dans d'autres modes de réalisation, qu'un instrument selon l'invention présente plus de deux arêtes de travail, au niveau d'une même section. À titre d'exemple, la figure 5 représente une section de la portion active d'un instrument selon un mode de réalisation de l'invention, qui présente une section triangulaire, dont chacun des trois sommets 51, 52 et 53 forme une arête de travail. Sur chaque portion de la longueur de l'instrument, au moins l'une de ces trois arêtes de travail, par exemple l'arête 51, constitue une arête régulière, située à une distance donnée de l'axe de rotation 50 de l'instrument.

L'une des autres arêtes, ou les deux autres arêtes 52 et 53, peuvent constituer des arêtes de travail irrégulières dont la distance par rapport à l'axe de rotation peut varier entre la distance entre cet axe de rotation 50 et l'arête de travail régulière et une distance inférieure. Ces arêtes irrégulières peuvent par exemple former des ondulations. Quand deux arêtes irrégulières 52 et 53 apparaissent dans une même section, il est possible que ces ondulations soient formées par des ondulations de la surface située entre les arêtes 52 et 53. Il peut être avantageusement prévu que les arêtes 52 et 53 présentent des ondulations alternées, le sommet de l'ondulation de l'une des arêtes correspondant au creux de l'ondulation de l'autre arête.

Lors de la rotation de cet instrument dans un canal dentaire, chacune des arêtes irrégulières 52 et 53 peut ainsi effectuer une découpe irrégulière de la surface interne du canal dentaire, alors que l'arête régulière 51 égalise cette découpe pour former une surface lisse.

Selon un mode de réalisation particulier, cette arête 51 peut être régulière sur toute sa longueur, et les arêtes 52 et 53 peuvent être irrégulières sur toute leur longueur. Il est également possible, dans d'autres modes de réalisation, que les différentes arêtes soient alternativement régulières et irrégulières. Il est cependant important que, dans chaque section transversale, au moins l'une des arêtes soit régulière, et que cette arête régulière soit la plus éloignée de l'axe de rotation de l'instrument.

La figure 6 représente une section de la portion active d'un instrument selon une variante de la solution représentée par la figure 5. Dans cette variante, un listel est formé le long de chacune des arrêtes de travail 51, 52 et 53. Dans ce cas, les irrégularités des arêtes irrégulières peuvent être formées par des ondulations ou des rainures sur cette surface de listel.

## Revendications

1. Instrument endodontique présentant un manche (1) apte à entraîner l'instrument en rotation autour de son axe longitudinal (10,50), et une lame (2) s'étendant le long dudit axe longitudinal (10, 50),
ladite lame (2) comportant une portion active (202) présentant au moins deux arêtes de travail (221, 241, 51, 52, 53), chacune desdites arêtes de travail formant, dans chaque section transversale de ladite portion active (202), un point du périmètre de la lame (2) plus éloigné de l'axe longitudinal (10, 50) de l'instrument que les points voisins,
ladite lame présentant, sur au moins un segment de ladite portion active (202),
- au moins une desdites arêtes de travail (221, 241, 51, 52, 53) qui est régulière, s'étendant à une distance dudit axe longitudinal (10, 50) qui est sensiblement constante ou variable régulièrement, et
- au moins une autre desdites arêtes de travail (221, 241, 51, 52, 53) qui est irrégulière,
**caractérisé en ce que** ladite ou lesdites arêtes de travail (221, 241, 51, 52, 53) irrégulières présentent une succession de creux, où ladite arête est plus proche dudit axe longitudinal (10, 50), et de bosses où ladite arête est plus éloignée dudit axe longitudinal (10, 50),
ladite ou lesdites arêtes de travail irrégulières étant situées, dans chaque section transversale dudit segment, à une distance dudit axe longitudinal (10, 50) qui est inférieure ou égale à la distance entre ledit axe longitudinal (10, 50) et ladite arête de travail régulière, ou l'une desdites arêtes de travail régulières.

2. Instrument endodontique selon la revendication 1, **caractérisé en ce que** ladite lame (2) présente plusieurs desdits segments, séparés entre eux par des parties de la longueur de ladite portion active (202) sur laquelle toutes lesdites arêtes de travail (221, 241, 51, 52, 53) sont régulières.

3. Instrument endodontique selon l'une quelconque des revendications précédentes, **caractérisé en ce que** lesdites arêtes de travail (221, 241, 51, 52, 53) présentent une forme générale hélicoïdale, centrée sur ledit axe longitudinal (10, 50).

4. Instrument endodontique selon l'une quelconque des revendications précédentes, **caractérisé en ce que** la largeur de ladite portion active (202) est décroissante le long dudit axe longitudinal (10, 50), en s'éloignant dudit manche (1).

5. Instrument endodontique selon l'une quelconque des revendications précédentes, **caractérisé en ce qu'**au moins l'une desdites arêtes de travail irrégulière est ondulée, présentant une succession régulière de creux et de bosses.

6. Instrument endodontique selon l'une quelconque des revendications précédentes, **caractérisé en ce qu'**au moins l'une desdites arêtes de travail irrégulière est formée par une succession de rainures ménagées dans au moins une des surfaces de ladite lame (2) bordant ladite arête de travail.

7. Instrument endodontique selon l'une quelconque des revendications précédentes, **caractérisé en ce que** ladite ou lesdites arêtes de travail irrégulières sont situées, dans chaque section transversale dudit segment, à une distance dudit axe longitudinal (10, 50) qui est comprise entre 80% et 100 % de la distance entre ledit axe longitudinal (10, 50) et ladite arête de travail régulière, ou l'une desdites arêtes de travail régulières.

8. Instrument endodontique selon l'une quelconque des revendications précédentes, **caractérisé en ce que**, dans une section transversale dudit segment correspondant à un creux de ladite ou de l'une desdites arêtes de travail irrégulières, ladite arête de travail irrégulière est située à une distance dudit axe longitudinal (10, 50) qui est comprise entre 80% et 95% de la distance entre ledit axe longitudinal (10, 50) et ladite arête de travail régulière, ou l'une desdites arêtes de travail régulières.

9. Instrument endodontique selon l'une quelconque des revendications précédentes, **caractérisé en ce que**, dans une section transversale dudit segment correspondant à une bosse de ladite ou de l'une desdites arêtes de travail irrégulières, ladite arête de travail irrégulière est située à une distance dudit axe longitudinal (10, 50) qui est comprise entre 95% et 100% de la distance entre ledit axe longitudinal (10, 50) et ladite arête de travail régulière, ou l'une desdites arêtes de travail régulières.

10. Instrument endodontique selon l'une quelconque des revendications précédentes, **caractérisé en ce que** ladite portion active présente deux arêtes de travail (221, 241), et **en ce que** ladite portion active (202) présente, sur sa longueur, une succession de plusieurs segments présentant chacun, dans cet ordre :
- une partie de la longueur de ladite portion active (202) sur laquelle une première desdites arêtes de travail est régulière, et la seconde desdites arêtes de travail est irrégulière,
- une partie de la longueur de ladite portion active (202) sur laquelle les deux arêtes sont régulières,
- une partie de la longueur de ladite portion active (202) sur laquelle ladite seconde arête de travail est irrégulière, et ladite première arête de travail est régulière, et
- une partie de la longueur de ladite portion active (202) sur laquelle les deux arêtes sont régulières.

11. Instrument endodontique selon l'une quelconque des revendications 1 à 9, **caractérisé en ce que** ladite portion active présente trois arêtes de travail (51, 52, 53), et **en ce que** ladite portion active présente, sur la totalité de sa longueur, au moins l'une desdites arêtes de travail qui est irrégulière.

12. Instrument endodontique selon l'une quelconque des revendications précédentes, **caractérisé en ce que** ladite portion active présente au moins une arête de travail (221, 241, 51, 52, 53) qui est régulière sur toute la longueur de ladite portion active (202).

## Patentansprüche

1. Endodontisches Instrument, das einen Griff (1), der geeignet ist, um das Instrument um seine Längsachse (10, 50) zu drehen, und ein Blatt (2) aufweist, das sich entlang der Längsachse (10, 50) erstreckt,
wobei das Blatt (2) einen aktiven Abschnitt (202) umfasst, der mindestens zwei Arbeitskanten (221, 241, 51, 52, 53) aufweist, wobei jede der Arbeitskanten in jedem Querschnitt des aktiven Abschnitts (202) einen Punkt auf dem Umfang des Blatts (2), der weiter von der Längsachse (10, 50) des Instruments als die angrenzenden Punkte entfernt ist,
wobei das Blatt an mindestens einem Segment des aktiven Abschnitts (202) aufweist:
- mindestens eine der Arbeitskanten (221, 241, 51, 52, 53), die gleichmäßig ist, die sich in einem Abstand von der Längsachse (10, 50) erstreckt, die im Wesentlichen konstant oder gleichmäßig variabel ist, und
- mindestens eine andere der Arbeitskanten (221, 241, 51, 52, 53), die ungleichmäßig ist,
**dadurch gekennzeichnet, dass die** eine oder die mehreren ungleichmäßigen Arbeitskanten (221, 241, 51, 52, 53) eine Abfolge von Vertiefungen, an der die Kante näher an der Längsachse (10, 50) liegt, und Höcker aufweisen, an denen die Kante weiter von der Längsachse (10, 50) entfernt ist,
wobei die eine oder die mehreren ungleichmäßigen Arbeitskanten in jedem Querschnitt des Segments in einem Abstand von der Längsachse (10, 50) gelegen sind, der kleiner als oder gleich dem Abstand zwischen der Längsachse (10, 50) und der gleichmäßigen Arbeitskante oder einer der gleichmäßigen Arbeitskanten ist.

2. Endodontisches Instrument nach Anspruch 1,
**dadurch gekennzeichnet, dass** das Blatt (2) mehrere der Segmente aufweist, die durch Teile der Länge des aktiven Abschnitts (202) voneinander getrennt sind, an dem sämtliche der Arbeitskanten (221, 241, 51, 52, 53) gleichmäßig sind.

3. Endodontisches Instrument nach einem der vorstehenden Ansprüche,
**dadurch gekennzeichnet, dass** die Arbeitskanten (221, 241, 51, 52, 53) eine im Allgemeinen spiralförmige Form aufweisen, die auf der Längsachse (10, 50) zentriert ist.

4. Endodontisches Instrument nach einem der vorstehenden Ansprüche,
**dadurch gekennzeichnet, dass** die Breite des aktiven Abschnitts (202) entlang der Längsachse (10, 50) bei Sichentfernen von dem Griff (1) abnimmt.

5. Endodontisches Instrument nach einem der vorstehenden Ansprüche,
**dadurch gekennzeichnet, dass** mindestens eine der ungleichmäßigen Arbeitskanten gewellt ist, die eine gleichmäßige Abfolge von Vertiefungen und Höckern aufweist.

6. Endodontisches Instrument nach einem der vorstehenden Ansprüche,
**dadurch gekennzeichnet, dass** mindestens eine der ungleichmäßigen Arbeitskanten durch eine Abfolge von Rillen ausgebildet ist, die in mindestens einer der Oberflächen des Blatts (2), die an die Arbeitskante angrenzt, angeordnet ist.

7. Endodontisches Instrument nach einem der vorstehenden Ansprüche,
**dadurch gekennzeichnet, dass die** eine oder die mehreren ungleichmäßigen Arbeitskanten in jedem Querschnitt des Segments in einem Abstand von der Längsachse (10, 50) gelegen sind, der zwischen 80 % und 100 % des Abstands zwischen der Längsachse (10, 50) und der gleichmäßigen Arbeitskante oder der einen der gleichmäßigen Arbeitskanten umfasst.

8. Endodontisches Instrument nach einem der vorstehenden Ansprüche,
**dadurch gekennzeichnet, dass** in einem Querschnitt des Segments, der einem Hohlraum der oder der einen der ungleichmäßigen Arbeitskanten entspricht, die ungleichmäßige Arbeitskante in einem Abstand von der Längsachse (10, 50) gelegen ist, der zwischen 80 % und 95 % des Abstands zwischen der Längsachse (10, 50) und der gleichmäßigen Arbeitskante oder einer der gleichmäßigen Arbeitskanten umfasst.

9. Endodontisches Instrument nach einem der vorstehenden Ansprüche,
**dadurch gekennzeichnet, dass** in einem Querschnitt des Segments, der einem Höcker der oder der einen der ungleichmäßigen Arbeitskanten entspricht, die ungleichmäßige Arbeitskante in einem Abstand von der Längsachse (10, 50) gelegen ist, der zwischen 95 % und 100 % des Abstands zwischen der Längsachse (10, 50) und der gleichmäßigen Arbeitskante oder einer der gleichmäßigen Arbeitskanten umfasst.

10. Endodontisches Instrument nach einem der vorstehenden Ansprüche,
**dadurch gekennzeichnet, dass** der aktive Abschnitt zwei Arbeitskanten (221, 241) aufweist und **dass** der aktive Abschnitt (202) entlang seiner Länge eine Abfolge mehrerer Segmente aufweist, von denen jedes in dieser Reihenfolge aufweist:
- einen Teil der Länge des aktiven Abschnitts (202), an dem eine erste der Arbeitskanten gleichmäßig ist und die zweite der Arbeitskanten ungleichmäßig ist,
- einen Teil der Länge des aktiven Abschnitts (202), an dem die zwei Kanten gleichmäßig sind,
- einen Teil der Länge des aktiven Abschnitts (202), an dem die zweite Arbeitskante ungleichmäßig und die erste Arbeitskante gleichmäßig ist, und
- einen Teil der Länge des aktiven Abschnitts (202), an dem die zwei Kanten gleichmäßig sind.

11. Endodontisches Instrument nach einem der Ansprüche 1 bis 9,
**dadurch gekennzeichnet, dass** der aktive Abschnitt drei Arbeitskanten (51, 52, 53) aufweist und **dass** der aktive Abschnitt über seine gesamte Länge mindestens eine der Arbeitskanten aufweist, die ungleichmäßig ist.

12. Endodontisches Instrument nach einem der vorstehenden Ansprüche,
**dadurch gekennzeichnet, dass** der aktive Abschnitt mindestens eine Arbeitskante (221, 241, 51, 52, 53) aufweist, die über die gesamte Länge des aktiven Abschnitts (202) regelmäßig ist.

## Claims

1. Endodontic instrument having a handle (1) capable of rotating the instrument about the longitudinal axis (10, 50) thereof, and a blade (2) extending along said longitudinal axis (10, 50),
said blade (2) comprising an active portion (202) having at least two working edges (221, 241, 51, 52, 53), each of said working edges forming, in each cross-section of said active portion (202), a point on the perimeter of the blade (2) that is further from the longitudinal axis (10, 50) of the instrument than the neighboring points,
said blade having, on at least one segment of said active portion (202),
- at least one of said working edges (221, 241, 51, 52, 53) which is regular, extending at a distance from said longitudinal axis (10, 50) which is substantially constant or regularly variable, and
- at least one other of said working edges (221, 241, 51, 52, 53) which is irregular,
**characterized in that** said irregular working edge(s) (221, 241, 51, 52, 53) have a succession of recesses, where said edge is closer to said longitudinal axis (10, 50), and bumps, where said edge is further away from said longitudinal axis (10, 50),
said irregular working edge(s) being located, in each cross-section of said segment, at a distance from said longitudinal axis (10, 50) which is less than or equal to the distance between said longitudinal axis (10, 50) and said regular working edge, or one of said regular working edges.

2. Endodontic instrument according to claim 1, **characterized in that** said blade (2) has a plurality of said segments, which are separated from each other by parts of the length of said active portion (202) over which all of said working edges (221, 241, 51, 52, 53) are regular.

3. Endodontic instrument according to any of the preceding claims,
**characterized in that** said working edges (221, 241, 51, 52, 53) have a generally helical shape, centered on said longitudinal axis (10, 50).

4. Endodontic instrument according to any of the preceding claims,
**characterized in that** the width of said active portion (202) decreases along said longitudinal axis (10, 50), away from said handle (1).

5. Endodontic instrument according to any of the preceding claims,
**characterized in that** at least one of said irregular working edges is corrugated, having a regular succession of recesses and bumps.

6. Endodontic instrument according to any of the preceding claims,
**characterized in that** at least one of said irregular working edges is formed by a succession of grooves provided in at least one of the surfaces of said blade (2) bordering said working edge.

7. Endodontic instrument according to any of the preceding claims,
**characterized in that said** irregular working edge(s) are located, in each cross-section of said segment, at a distance from said longitudinal axis (10, 50) which is between 80% and 100% of the distance between said longitudinal axis (10, 50) and said regular working edge, or one of said regular working edges.

8. Endodontic instrument according to any of the preceding claims,
**characterized in that,** in a cross-section of said segment corresponding to a recess of said or one of said irregular working edges, said irregular working edge is located at a distance from said longitudinal axis (10, 50) which is between 80% and 95% of the distance between said longitudinal axis (10, 50) and said regular working edge, or one of said regular working edges.

9. Endodontic instrument according to any of the preceding claims,
**characterized in that,** in a cross-section of said segment corresponding to a bump of said or one of said irregular working edges, said irregular working edge is located at a distance from said longitudinal axis (10, 50) which is between 95% and 100% of the distance between said longitudinal axis (10, 50) and said regular working edge, or one of said regular working edges.

10. Endodontic instrument according to any of the preceding claims,
**characterized in that** said active portion has two working edges (221, 241), and **in that** said active portion (202) has, over the length thereof, a succession of a plurality of segments each having, in this order:
- a part of the length of said active portion (202) over which a first of said working edges is regular, and the second of said working edges is irregular,
- a part of the length of said active portion (202) over which the two edges are regular,
- a part of the length of said active portion (202) over which said second working edge is irregular, and said first working edge is regular, and
- a part of the length of said active portion (202) over which the two edges are regular.

11. Endodontic instrument according to any of claims 1 to 9,
**characterized in that** said active portion has three working edges (51, 52, 53), and **in that** said active portion has, over the entire length thereof, at least one of said working edges which is irregular.

12. Endodontic instrument according to any of the preceding claims,
**characterized in that** said active portion has at least one working edge (221, 241, 51, 52, 53) which is regular over the entire length of said active portion (202).
